# EUROPEAN PATENT SPECIFICATION

(11) **EP 2 597 016 B1**
(45) Date of publication and mention of the grant of the patent: **27.08.2014**
(21) Application number: 12194331.0
(22) Date of filing: 27.11.2012
(51) Int. Cl.: B62D 15/02

(54) **Parking assistance apparatus and parking method**
Einparkhilfsvorrichtung und Einparkverfahren
Appareil d'assistance au stationnement et procédé de stationnement

(30) Priority: 28.11.2011 GB 201120429
(43) Date of publication of application: 29.05.2013
(73) Proprietor: Nissan Motor Manufacturing (UK) Ltd., Cranfield Bedfordshire MK43 0DB (GB)
(72) Inventor: Linchyk, Alexandra, Cranfield, Bedfordshire MK430DB (GB); Church, Christopher, Cranfield, Bedfordshire MK430DB (GB)

(56) References cited:
- EP-A1- 2 011 701
- EP-A1- 2 017 138
- EP-A2- 2 093 129

## Description

### Technical Field of the Invention

The present invention relates to an apparatus and to a method for assisting in the parking of a motor vehicle.

### Background to the Invention

Systems for assisting a driver to reverse into a parking space are known. When a driver wishes to park in a space, they drive past the space; and sensors mounted on the vehicle determine if the space is sufficiently large to accommodate the vehicle. If the parking space is suitable, the system guides the driver to a starting position from which the vehicle can be reversed into the space; and calculates a pathway along which the vehicle is to be moved from the starting position to a parked position centrally within the space. The system controls operation of the powered steering as the vehicle is reversed along the pathway into the space. Usually the driver controls the transmission, accelerator and brakes; but more complex systems that control some or all of these functions have also been proposed.

There are a number of principal parking arrangements including parallel parking; perpendicular parking; and angled or echelon parking.

In parallel parking, a vehicle is manoeuvred into a space aligned generally parallel to the direction of travel of the vehicle prior to parking. When parallel parking, the vehicle enters the parking space through one of the longitudinal sides of the space; while other vehicles may be located at both ends of the parking space. When parallel parked, vehicles are generally aligned in-line with one another. Parallel parking is most often used along the side of public roads, where the parked vehicle is aligned generally parallel to the kerb.

In perpendicular parking, a vehicle is manoeuvred into a space which is aligned generally perpendicular to the direction of travel of the vehicle prior to parking. When perpendicular parking, the vehicle enters the space through one end; and vehicles or other obstacles may be located on both longitudinal sides of the parking space. In perpendicular parking, parked vehicles are aligned side-by-side. Perpendicular parking is sometimes found along the side of a public road, but is also used in car parks (parking lots); and in other designated parking areas, in which parking bays are defined by markings on the ground. The parking bays are typically arranged in rows with an aisle between adjacent rows along which vehicles can be driven to enter or leave a parking bay.

As an exception to these general rules, some very short vehicles - typically two-seat city cars - are short enough to be perpendicularly parked in a parallel parking spot.

Angled parking, sometimes also referred to as echelon parking, is very similar to perpendicular parking; except that the parking spaces are angled relative to the aisle or road, rather than being perpendicular. With angled parking, the parked vehicles are aligned generally side by side; and similar considerations to those that arise in relation to perpendicular parking apply.

Perpendicular and angled parking spaces are sometimes narrow and may be bounded on one or both longitudinal sides by obstacles such as other vehicles, walls, bollards or the like that impede opening of the vehicle's doors. This is a particular problem for the driver of a vehicle, who may find it difficult to get into and out of the vehicle once it has been parked; and is especially difficult for drivers with limited mobility, such as disabled or elderly persons. A particular problem arises where a vehicle is parked with its driver's door opposite a door on the non-driver's side (referred to hereafter as the passenger side) of an adjacently parked vehicle. In this situation, the maximum opening angle of the driver's door is significantly limited if the passenger side door of the adjacent vehicle is opened at the same time, as the two doors will open towards each other.

It is an object of the invention to provide an improved parking assistance apparatus which overcomes, or at least mitigates, at least one of the above problems.

It is a further object of the invention to provide an improved parking method which overcomes, or at least mitigates, at least one of the above problems.

EP2093129 (A2) is considered as the closest prior art and shows the preamble of claims 1 and 14.

### Summary of the Invention

In accordance with a first aspect of the invention, there is provided a parking assistance apparatus according to claim 1.

Further preferred features of the first aspect of the invention are set out in the claims dependent on claim 1. In particular, the processing means may be programmed or arranged so as to determine a target parking orientation for the vehicle which will position the driver's door of the vehicle adjacent to the driver side of a vehicle parked adjacent to the parking space.

In accordance with a second aspect of the invention, there is provided a method for parking a vehicle according to claim 14.

In accordance with a third aspect of the invention, there is provided a vehicle including apparatus according to the first aspect of the invention; or arranged to perform a method according to the second aspect of the invention.

### Detailed Description of the Invention

An embodiment of the invention will now be described, by way of example only, with reference to the accompanying drawings, in which:
Figure 1 a is a schematic view of a first embodiment of the invention;
Figure 1b is a schematic view of an interface for making user selections;
Figure 2 is a flow diagram of a parking method;
Figure 3 illustrates a vehicle scanning parked vehicles to determine their orientation;
Figure 4 illustrates the movement of a vehicle when undertaking the method shown in Figure 2;
Figure 5a shows the position of a vehicle when positioned centrally within a parking space having performed a parallel parking manoeuvre;
Figure 5b shows the position of a vehicle when positioned longitudinally offset from a lateral axis of a parking space having performed a parallel parking manoeuvre;
Figure 6 is a schematic, partial view from above of two adjacently parked vehicles positioned so that the driver's door of one vehicle is located adjacent to a passenger door of the other vehicle, illustrating how the angle of opening of the doors is significantly limited when both are opened simultaneously;
Figure 7 is a schematic partial view from above of two adjacently parked vehicles in which the vehicles are positioned so that their drivers' doors are located adjacent to one another, illustrating how the doors open opposite handed, allowing a maximised angle of opening even when both doors are opened simultaneously; and
Figures 8a to 8d are a series of plan views illustrating a range of parking scenarios.

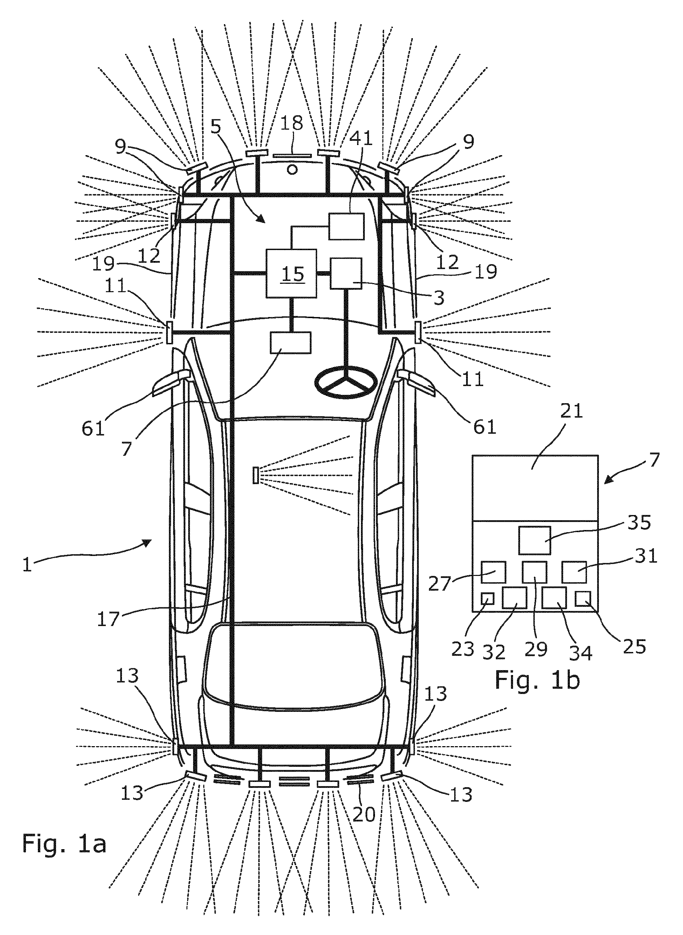

Figure 1 a shows a vehicle 1 in the form of a car including an electric power steering device 3, a parking assistance system 5, which includes a driver interface 7, front sensors 9, first side sensors 11, second side sensors 12, and rear sensors 13. The sensors 9, 11, 12, and 13 are connected to a controller 15 having a programmable processing device and memory via a high speed CAN-bus 17.

The driver interface 7 shown in Figure 1b includes a display 21, a speaker 23, an on/off switch 25, a passenger side offset switch 27, a central positioning switch 29, a driver side offset switch 31, a forward offset switch 32, a reverse offset switch 34, and a vehicle orientation option switch 35. The switches enable the user to specify preferences for the parking manoeuvre to be performed, including offset parking and vehicle orientation options.

The front and rear sensors 9, 13 are located in apertures formed in the front and rear bumpers 18, 20 respectively. The front and rear sensors 9, 13 are proximity sensors for detecting nearby objects at a low level. The sensors are typically ultrasonic sensors, that are arranged to measure the time taken for each sound pulse to be reflected back to the receiver. The controller 15 receives inputs from the front and rear sensors 9, 13 via the CAN-bus 17. The controller 15 determines distances to the nearby objects and provides feedback to the driver, which indicates the distance between the car 1 and the object; particularly to the nearest object. The controller device 15 sends signals to the speaker 23 to provide audible feedback, typically in the form of a series of beeps and/or tones, which increase in frequency as the distance between the car 1 and the object decreases. A continuous tone is emitted when the distance between the car 1 and the object is less than a predetermined minimum. Optionally, the controller 15 can provide distance feedback via the display 21.

The front and rear sensors 9, 13 include at least one sensor 9, 13 located at each corner of the car to improve the accuracy of detection around those parts of the car 1, and to improve the accuracy of the parking manoeuvre.

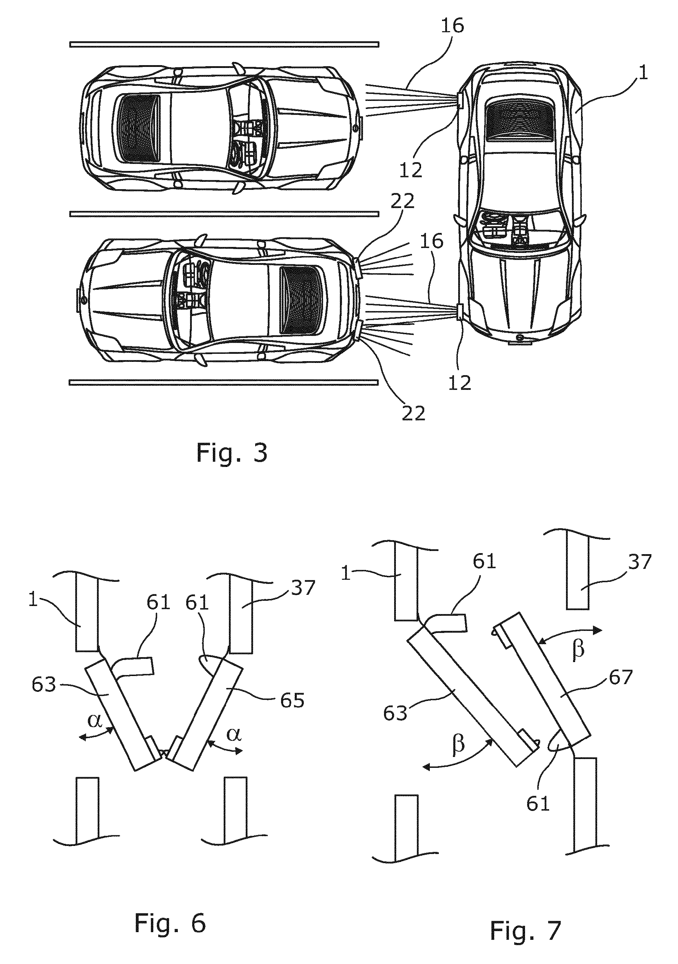

The first side sensors 11 are mounted in the front wings 19 of the car. The first side sensors 11 are ultrasonic sensors that are arranged to measure the time taken for each sound pulse to be reflected back to their receivers from adjacent objects that define the parking space. For example, the first side sensors 11 can detect adjacent vehicles, walls, fences, barriers, kerbs and/or white lines on the road surface. The system takes readings of the parking space as the car 1 drives past the parking space (see Figure 3) using the first side sensors 11. Outputs from the first side sensors 11 and from a vehicle speed sensor 41 are communicated to the controller 15 via the CAN-bus 17. The controller 15 determines the size of the parking space available from the signals received from the first side sensors 11 and from the speed sensor 41.

The controller 15 determines if a perpendicular parking manoeuvre or a parallel parking manoeuvre is required according to the signals received from the side and speed sensors 11, 41.

The second side sensors 12 are arranged to scan vehicles to determine their orientation, that is to say whether they are parked forward facing (nose out); or rearward facing (nose in). The second sensors may be activated automatically where the system determines that a perpendicular parking manoeuvre is required; or they may be activated only in response to the user providing an input to activate the orientation option. The second side sensors 12 and the controller 15 may be configured to detect the presence of coloured reflectors (usually red) found at the rear of most vehicles in order to determine the orientation of the adjacent vehicles as illustrated in Figure 3. The second side sensors 12 may be active infra-red sensors having a transmitter for emitting a beam of infra-red light 16; and a receiver for detecting infra-red light reflected from surfaces within the field of operation of the sensor. The second side sensors 12 and the controller 15 are configured to determine whether infra-red light received by the receiver has been reflected from a reflector 22 on the parked vehicle to allow the system to determine whether a vehicle is rearward facing, where the response indicates the presence of one or more reflectors; or forward facing, where the response indicates that no reflector is present.

Other sensing arrangements for determining the orientation of vehicles can also be used. For example, infra-red or other light emitting sensors may be adapted to detect reflections from side mirrors as an indication that a vehicle is rearward facing; or reflections from head lamps as an indication that a vehicle is forward facing. More sophisticated sensing arrangements including imaging systems and/or sensors capable of detecting colour can be used. For example, in many countries, different coloured licence plates are fitted to the front and rear of vehicles. This feature can be used to determine the orientation of a vehicle by use of appropriate colour detection means.

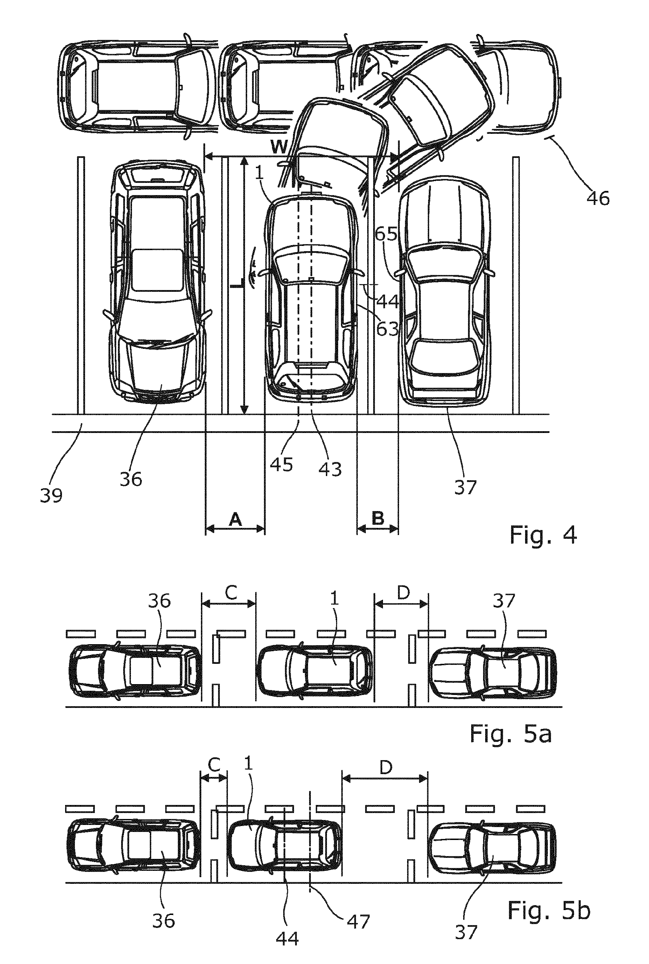

Figure 4 illustrates a perpendicular parking manoeuvre into a parking space which is bounded by first and second vehicles 36, 37; and by a kerb 39. The distance between the first and second vehicles defines the width W of the parking space; while the position of the kerb 39 defines the length L of the parking space. The parking space has a longitudinal mid-line 45, which is arranged substantially perpendicular to the road or aisle 46; and a lateral mid-line 44, which is arranged substantially perpendicular to the longitudinal mid-line.

The first and second side sensors 11, 12 on both sides of the car 1 operate simultaneously. The driver indicates to the parking assistance system 5 which side of the road he wants to park the vehicle on by actuating an indicator switch, or by making an input via the driver interface 7.

Once a suitable parking space has been detected, the controller 15 determines a pathway along which the car 1 is to be moved to position the car in the parking space from the data relating to the size and orientation of the parking space, and a known start position. The controller 15 generates control signals for the electric power steering device 3 to steer the vehicle along the predetermined pathway, from the start position to the parking position selected by the user. The driver is able to select from passenger side and driver side lateral offset positions, a central position, and forward and reverse longitudinal offset positions according to at least one input made via the switches 27, 29, 31, 32, 34.

When a lateral offset position is selected (passenger side or driver side), the controller 15 calculates the pathway along which the vehicle is to be moved such that, in its parked position, the longitudinal mid-line 43 of the car 1 is laterally offset from the longitudinal mid-line 45 of the parking space (see Figure 4). The effect of this is that the distance A between the car 1 and the first vehicle 36 is different from the distance B between the car 1 and the second vehicle 37. Thus the car 1 is non-centrally positioned along the width dimension of the parking space. The car 1 is positioned closer to the first vehicle 36 when the passenger side offset switch 27 is selected (for a right hand drive car), and is positioned closer to the second vehicle 37 when the driver side offset switch 31 is selected (for a right hand drive car). Thus the driver is able to select a parking position that provides a greater amount of space on either the passenger or driver side of the vehicle, for each parking manoeuvre, in order to improve access to that side of the vehicle.

Typically, the controller 15 positions the car 1 within the parking space such that the longitudinal mid-line of the car 43 is arranged substantially parallel to the longitudinal mid-line of the parking space 45.

For use particularly in parallel parking situations, the driver is able to select a longitudinal offset as illustrated in Figures 5a and 5b. When a longitudinal offset position is selected (forward or reverse), the controller 15 calculates the pathway along which the vehicle is to be moved such that, in its parked position, the perpendicular or lateral mid-line 44 of the car is longitudinally offset from the perpendicular mid-line 47 of the parking space. The effect of this is that the distance C between the car 1 and the first vehicle 36 is different from the distance D between the car 1 and the second vehicle 37 (Figure 5b). Thus the car 1 is non-centrally positioned along the length dimension of the parking space. This compares with the conventional central positioning, wherein the distance C between the car 1 and the first vehicle 36 is equal to the distance D between the car 1 and the second vehicle 37 (see Figure 5a).

The car 1 is positioned closer to the first vehicle 36 when the forward offset switch 32 is selected, and is positioned closer to the second vehicle 37 when the reverse offset switch 34 is selected. Thus the driver is able to select a parking position that provides a greater amount of space either to the front of the car, for example to provide better access to the bonnet; or to the rear of the car, to provide better access to the boot. Where the driver controls the transmission, accelerator and brakes, the system 5 may provide instructions to the driver via the interface 7 to position the car 1 within the parking space with the required offset.

Typically, the controller 15 positions the car 1 within the parking space such that the lateral mid-line of the car 44 is arranged substantially parallel to the lateral mid-line 47 of the parking space.

Whilst the longitudinal offset is intended primarily for use when parallel parking, a longitudinal offset could also be selected when a perpendicular parking manoeuvre is being carried out. This could position the car with more clearance at the rear, say to allow for access to the boot where the vehicle is reverse parked; or to position the car further into the space.

Optionally, the car 1 can include motorised wing mirrors (61, Fig. 1a; also known as door mirrors). The controller 15 is arranged to control operation of the wing mirrors 61 during a parking manoeuvre. The wing mirrors are individually controllable by the controller 15. The controller 15 is programmed to fold in the wing mirror on the side of the vehicle that is parked closest to an adjacent object, to protect the mirror from damage; while leaving the other wing mirror in the normal operating position. This has the advantage that the non-closed mirror is usable by the driver when parking. Optionally, the controller 15 can be programmed to fold in both mirrors during each parking manoeuvre. Optionally, the interface 7 can include a control to enable the driver to select between a first operational mode wherein a single wing mirror 61 is moved to a closed position during parking; and a second operational mode wherein both wing mirrors 61 are moved to closed positions when parking.

In the perpendicular parking manoeuvre described above with reference to Figure 4, the orientation of the first and second vehicles 36, 37 on either side of the parking space is not taken into consideration; and the car 1 is reverse parked. Reverse parking is generally considered to be advantageous as most vehicles have a smaller turning circle in reverse, making it easier to enter a narrow parking space; and it is usually easier for a driver to manoeuvre out of a parking space in a forward direction. However, as a result of being reverse parked, the driver's door 63 of the vehicle 1 is located adjacent to a door 65 on the passenger side of the second vehicle 37, which has also been reverse parked. This arrangement is disadvantageous, as shown schematically in Figure 6; where it can be seen that the maximum opening angle α of the driver's door 63 is significantly reduced should the passenger door 65 of the second vehicle 37 be opened at the same time, as the two doors 63, 65 will open towards each other.

In contrast, as illustrated in Figure 7, where a vehicle is parked so that its driver's door 63 is positioned adjacent to a driver's side door 67 of an adjacent vehicle, the two doors 63, 67 can be opened over a much greater opening angle β, even when the two doors are both open at the same time, thus maximising access to the car 1 for the driver; and simultaneously maximizing access to the adjacent vehicle 37. A further problem with the parking arrangement shown in Figure 6 is that the side mirrors 61 of the two vehicles may be positioned adjacent to one another, or at least in close proximity; making it difficult to walk between the vehicles to exit the parking space; and risking damage to the mirrors, even if they have been retracted. With the parking arrangement as shown in Figure 7, the longitudinal offset between the two mirrors 61 is likely to be greater.

In accordance with the invention, the parking assistance system 5 incorporates a user selectable orientation option that is configured to orientate the car 1 in the parking space either forward facing (reverse parked) or rearward facing (forward parked) according to at least one pre-determined preference dependent on the orientation of one or more vehicles located adjacent to the parking space when perpendicular parking.

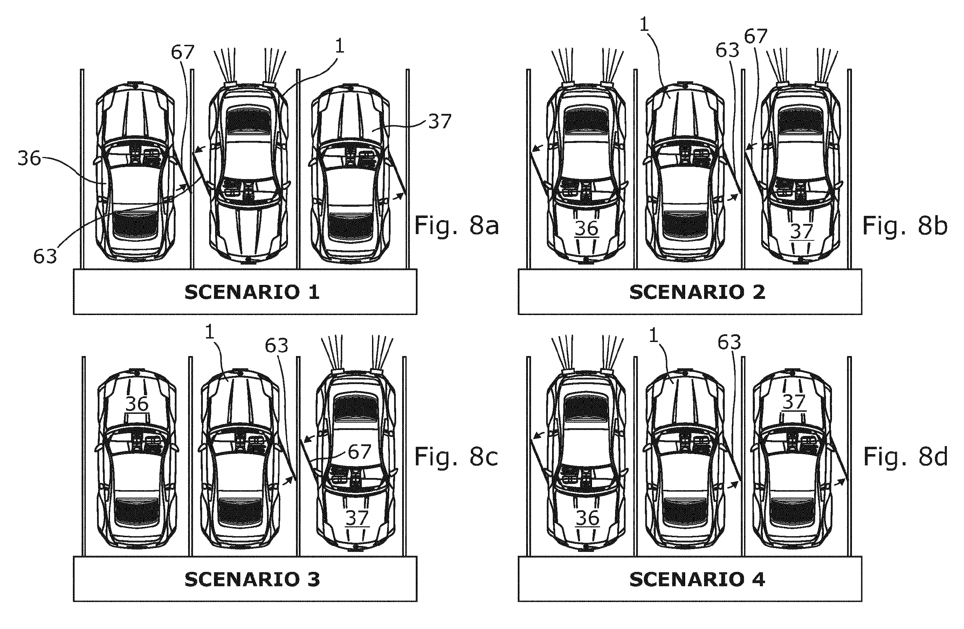

In the present embodiment, when the orientation option is active, the system 5 is configured to orientate the vehicle in the parking space so that the driver's door 63 is positioned adjacent to the driver's side of an adjacently parked vehicle as a main preference. Figures 8a to 8d illustrate a range of different perpendicular parking scenarios. In Figure 8a, the first and second vehicles 36, 37 in the adjacent parking spaces are both forward facing. In this case, in order to position the driver's door 63 of the car 1 adjacent to the driver's side of one of the adjacent vehicles 36, the car 1 must be forward parked in a rearward facing orientation as illustrated. In the scenario illustrated in Figure 8b, the first and second vehicles 36, 37 are both rearward facing; so the car 1 must be reverse parked in a forward facing orientation to position its driver's door 63 adjacent to the driver's door 67 of the second vehicle 37.

In Figure 8c, the first car 36 to the left (as shown) of the parking space is forward facing and the second car 37 on the right (as shown) is rearward facing. In this case, the car 1 can be oriented either forward facing or rearward facing. The system 5 may be configured to ask the driver to input a preference for forward or rearward parking; or a default preference may be set in the system. Where a default preference is set, the system may enable the driver to override the default via an input on the interface.

In the final scenario illustrated in Figure 8d, the first car 36 to the left (as shown) of the parking space is rearward facing and the second car 37 on the right (as shown) is forward facing. In this case, it is not possible to orientate the car 1 so that its driver's door is positioned adjacent to the driver's side of either of the adjacent vehicles 36, 37. In this case, the car 1 can be oriented either forward or rearward facing as preferred by the driver; or in accordance with a default preference as discussed above in relation to the scenario in Figure 8c. Where the car 1 cannot be oriented in accordance with the primary preference of positioning the driver's door adjacent to the driver's side of one of the adjacent vehicles, the system may indicate this to the driver via the interface 7 to allow the driver to select an alternative parking space if desired.

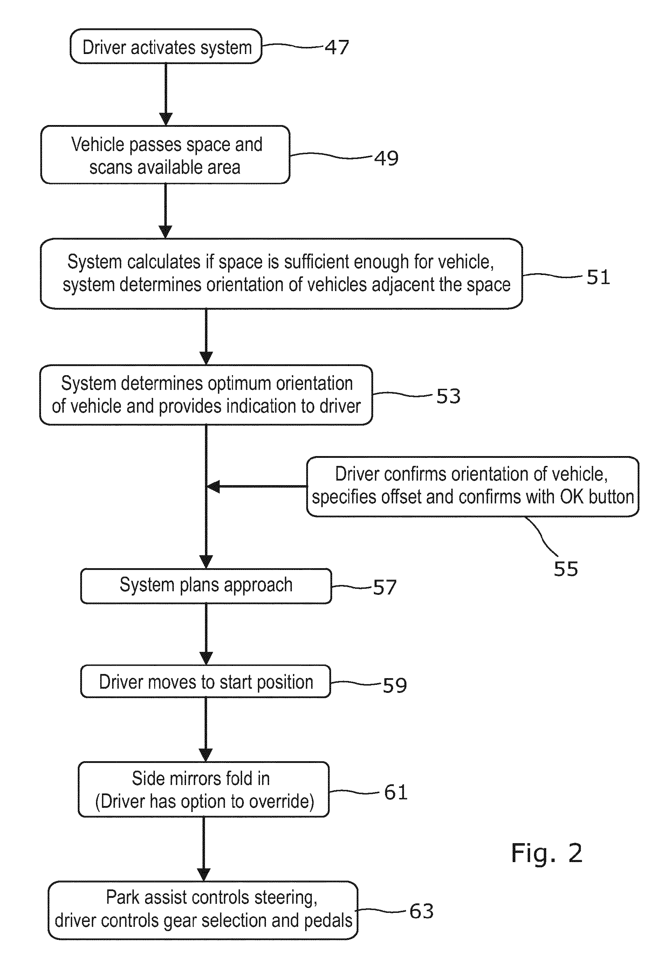

In use, a driver wanting to park the car 1 activates (step 47, Fig. 2) the parking assistance by operating the switch 25, this causes the first side sensors 11 to scan (step 49) the available area for potential parking spaces and the second side sensors 12 to scan to determine the orientation of any vehicles 36, 37 parked in adjacent spaces. When the car 1 passes a potential parking space, the controller 15 calculates (step 51) if there is sufficient space for the car 1 to park. If the controller 15 determines that sufficient space is available, it indicates this to the driver via the interface 7, for example via the speaker 23 and/or display 21. Where the controller determines that a perpendicular parking manoeuvre is required, or in response to a user input indicating that the orientation option is to be activated, it determines the orientation of any vehicles parked adjacent to the space; and determines whether the vehicle 1 should be reverse parked or forward parked, based on one or more of the pre-defined preferences.

The determined target orientation is indicated to the driver (step 53) via the interface. The driver is requested to confirm acceptance, or to select the opposite orientation (step 55). The driver also specifies the required position within the parking space by operating at least one of offset parking switches 27, 31, 32, and 34; or the central parking position switch 29. The driver stops the car and the controller 15 determines the pathway (step 57) along which the car 1 needs to move, in order to position the vehicle within the parking space according to the position selection made by the driver and the required orientation. If the vehicle cannot be manoeuvred into the space at the target position and in the required orientation from the position it is stopped in, the controller determines an appropriate starting position and the system guides the driver to the starting position via the interface (step 59).

For example, where the car 1 is to be forward parked, it will be necessary to reverse the car 1 back past the parking space to a suitable starting position. In this case, the controller may re-calculate the required pathway once the vehicle has stopped again; or the controller may constantly update the required pathway. Once the vehicle is in an acceptable starting position, the driver is instructed to select either reverse or a suitable forward gear (typically first gear), depending on the required direction of travel. The controller 15 sends control signals (step 63) to the steering device 3 to steer the car into the parking space in the required orientation and with the required positional offset (if any) selected by the driver. The driver controls the accelerator and brake during the parking manoeuvre (step 63). Optionally, the controller 15 controls the wing mirrors 61 to fold at least one of them inwards (step 61), to reduce the likelihood of collisions with the adjacent vehicles 36, 37.

Where the car 1 has been forward parked, the system 5 may also be configured to assist the driver in reversing out of the parking space by controlling the powered steering device 3; depending on inputs from the front, rear and first side sensors 9, 13, and 11.

In the above example, there are vehicles positioned adjacent the parking space on both sides; which is a typical parking scenario. Sometimes, a parking space is defined between a non-movable obstacle, such as a wall or a bollard, on one side; and a vehicle on the other side. In this case, the system may be configured to determine a target orientation in which the car 1 should be parked, based on the orientation of the single adjacent vehicle. For example, if the adjacent vehicle has its driver's side facing the parking space, the system 5 will determine the orientation of the vehicle being parked so as to position its driver's door adjacent to the driver's side of the adjacent vehicle. The system may also take other factors into consideration when determining the most suitable orientation, including the width of the parking space. These factors can be set as additional preferences.

Rather than a push button interface as shown in Figure 1b, in an alternative interface (not shown) the interface may be provided with a touch sensitive screen arranged to display information to the user about the parking system, including parking instructions and status information, and a speaker, for example for providing audible instructions. With a touch sensitive screen, the user can make offset and/or orientation option selections by touching appropriate parts of the screen. For example, the touch sensitive screen can provide switches 25, 27, 29, 31, 32, 34 and 35 as icons on the screen. If provided with an interactive touch sensitive screen, the interface may allow the user to select a range of different screens using a menu option so that the various offset and orientation options can be input by the user through differently adapted screens.

For example, the user can input the extent of lateral offset positioning by sliding a movable pointer along a scale between minimum and maximum offset positions. The pointer can be arranged to move continuously along the scale or to make discrete steps, for example increasing or decreasing offset positioning by 10% steps. An "accept" icon may be provided on the screen so that the user can confirm the pointer position as the required offset position. Preferably the screen displays a warning message which indicates that the last 20% of the offset scale should only be used against static objects such as walls, fences, etc. This enables the drivers of the adjacent vehicles 36, 37 to access their vehicles. The system 5 may in any case, have a limited offset to ensure that adjacent vehicles are not blocked in.

A similar interactive display can be provided for selecting the extent of the longitudinal offset required. This could be provided on the same screen as the lateral offset, or on a separate screen.

The interface 7 as described above can also be provided with a menu system to allow the user to select options and to input defaults, using the various buttons 25 to 35.

In a first configuration, the system 5 and interface 7 are arranged such that the user is only permitted to select lateral offset positions when a perpendicular parking manoeuvre is performed (see Figure 4); and to select longitudinal offset positions only when a parallel parking manoeuvre is performed (see Figure 5). In a second configuration, the system 5 and interface 7 are arranged such that one of the lateral offset positions or one of the longitudinal offset positions can be selected for perpendicular parking and for parallel parking manoeuvres. In a third configuration, the system and interface 7 are arranged such that for at least one of perpendicular parking and parallel parking manoeuvres, and preferably both types of manoeuvre, the user is able to select a lateral offset position and a longitudinal offset position. For example, by setting the lateral offset position such that the driver side is closer to the longitudinal mid-line 45 of the parking space and the longitudinal offset position such that the rear bumper is closer to the lateral mid-line 44 of the parking space, the user can provide additional space for accessing both the driver side and the boot of the vehicle.

The interface also offers the user the option of setting a default offset position. For example, if the user frequently requires the car 1 to be positioned in the passenger side offset position, the controller 15 will automatically use the default setting in order to position the vehicle such that the passenger side is closest to an adjacent vehicle, unless another selection is made for a particular parking manoeuvre.

It will be appreciated by the skilled person that variants to the above embodiment can be made, but will still fall within the scope of the invention. For example, the ultrasonic side sensors 11 can be replaced with a different type of sensor. For example, the side sensors 11 can be replaced with cameras; while the controller 15 can be arranged to interpret pictures received from the cameras in order to determine the size, shape and orientation of the parking space.

At least some of the sensors 9, 11, 13 can be infrared sensors, radar sensors or optical sensors.

The parking assistance apparatus can be arranged to control the speed of the car 1 during a parking manoeuvre.

The interface 7 can include at least one slide device that is arranged to enable a user to input the extent to which the car is offset from an axis. For example, the slide device can include a setting member that can be moved along a scale, wherein the positions on the scale represent the extent to which the vehicle is offset within the parking space. This is an electromechanical version of the scale displayed by the touch sensitive screen in the alternative interface. The interface 7 can include a first slide device for lateral offset positions, and a second slide device for longitudinal offset positions.

The interface 7 can include +ve and -ve (positive and negative) buttons to enable the user to increase and decrease the offset position. These buttons can be provided as graphics on a touch sensitive screen.

The interface 7 can include at least one dial for selecting the extent to which the vehicle is offset from a central position. The dial includes a zero position, which represents a central position in the parking space. Rotating the dial clockwise from the central position increases the offset positioning in a first direction, for example the driver side; while rotating the dial anti-clockwise from the zero position increases the offset positioning in a second direction that is opposite to the first direction, for example the passenger side. Another dial can be included for the forward and reverse offset positions.

The interface can be arranged to enable a user to type in a value for the extent of offset positioning required; to select between high, medium and low preset offset positions; and/or to make inputs via a menu driven system on the screen.

The interface can also be arranged to offer the user the option of setting the orientation option as a default, where they require this option to be used in most parking procedures. The interface can also be configured to offer the user the option of setting a preference for forward or reverse parking where the system 5 is not able to otherwise determine a preferred orientation after applying the pre-defined preferences, such as positioning the driver's door adjacent to the driver's side of an adjacent vehicle.

In most cases, it is expected that the orientation option would be selected in combination with a passenger side lateral offset to maximise the space available for the driver to enter and leave the vehicle. Where necessary, any passengers can leave the vehicle before it is parked and/or be picked up after the vehicle has left the parking space; but the driver will always have to enter or leave the vehicle whilst it is parked. The parking assistance system 5 may be configured so that when the orientation option is active, it automatically determines an optimum offset and orientation to maximise space for the driver within pre-set parameters. In some embodiments, the system may not be configured to allow the user to select an offset, at least when the orientation option is selected.

Indeed, it is not essential that the apparatus and method in accordance with the invention provide the facility to offset a vehicle in a parking space at all. Accordingly, in the embodiments described, the offset features may be omitted to provide a simplified system having only an orientation option; but no offset facility. The simplified system would be capable, when the orientation option is selected, of determining an optimum orientation in which the vehicle 1 should be parked, dependent on the orientation of any vehicles parked adjacent to a vacant parking space in accordance with a set of pre-defined preferences; calculating a pathway along which the vehicle can be moved from a start position into the parking space in the selected orientation; and controlling at least the steering device 3 in order to guide the vehicle 1 along the determined pathway from the starting position to the target position in the parking space.

Whilst the invention has been described primarily in relation to a perpendicular parking manoeuvre, it should be understood that the apparatus and methods described can be used with angled or echelon parking manoeuvres; or indeed with any parking manoeuvre where a vehicle is to be positioned side-by-side with at least one other vehicle, provided the sensors have a sufficiently broad range of angles of transmission and detection. It should be understood therefore that references to "perpendicular parking" and the like are intended to identify parking arrangements in which vehicles are aligned generally side-by-side; and should not be interpreted as requiring a strict geometric relationship between the parking space and the road, aisle or other access path for a vehicle.

The foregoing embodiments are not intended to limit the scope of protection afforded by the claims, but rather to describe examples as to how the invention may be put into practice.

## Claims

1. A parking assistance apparatus (5) for a vehicle (1), including a control system (15) having a processing means and sensor means (9, 11, 12, 13) connected with the processing means, the processing means being configured to:
determine the size of a vacant parking space according to inputs received from the sensor means (9, 11, 13);
said parking assistance apparatus being **characterized in that** said processing means are further configured to:
detect the presence of any vehicles (36, 37) parked adjacent the parking space on either longitudinal side thereof and determine the forward or rearward facing orientation of any detected vehicles (36, 37) according to inputs from the sensor means (12);
determine a target forward or rearward facing orientation in which the vehicle (1) is to be parked in the parking space in accordance with at least one pre-determined preference based on the orientation of any detected vehicles (36, 37) parked adjacent to the parking space;
determine a pathway along which the vehicle (1) is to be moved in order to position the vehicle (1) within the parking space in the target orientation; and
to generate control signals for a vehicle steering device (3) to guide the vehicle (1) along the pathway into the parking space in the target orientation.

2. Apparatus (5) according to claim 1, wherein the processing means has a primary preference to determine a target parking orientation for the vehicle (1) which will position the driver's door (63) of the vehicle (1) adjacent to the driver side (67) of a vehicle (37) parked adjacent to the parking space.

3. Apparatus (5) according to claim 2, wherein the processing means is arranged to determine a target parking orientation for the vehicle (1) in accordance with a pre-set default for either forward facing or rearward facing, in the event that a target orientation cannot otherwise be determined after applying the at least one pre-determined preference.

4. Apparatus (5) according to any one of the preceding claims, wherein the sensor means (12) for determining the orientation of vehicles (36, 37) parked adjacent the parking space comprises at least one infra-red or optical sensor.

5. Apparatus (5) according to claim 4, wherein the control system (15) is configured to look for the presence of one or more rear reflectors (22) on any detected vehicle (36, 37) in order to determine its orientation.

6. Apparatus (5) according to any one of the preceding claims, wherein the processing means is further arranged to determine the pathway so that the vehicle (1) is positioned laterally and/or longitudinally offset within the parking space; and to generate control signals for a vehicle steering device (3) to guide the vehicle (1) along the pathway into the parking space in the target orientation and in the target offset position.

7. Apparatus (5) according to claim 6, wherein, in a first operational mode, the processing means is arranged to determine the pathway so that the driver side (63) of the vehicle (1) is positioned closer to a central longitudinal axis (45) of the parking space than the passenger side (65) of the vehicle.

8. Apparatus (5) according to claim 6, wherein, in a second operational mode, the processing means is arranged to determine the pathway so that the passenger side (65) of the vehicle (1) is positioned closer to the central longitudinal axis (45) of the parking space than the driver side (63) of the vehicle.

9. Apparatus (5) according to any one of claims 6 to 8, wherein, in a third operational mode, the processing means is arranged to determine the pathway so that the front end (18) of the vehicle (1) is positioned closer to a central lateral axis (44, 47) of the parking space than the rear end (20) of the vehicle.

10. Apparatus (5) according to any one of claims 6 to 8, wherein, in a fourth operational mode, the processing means is arranged to determine the pathway so that the rear end (20) of the vehicle (1) is positioned closer to a central lateral axis (44, 47) of the parking space than the front end (18) of the vehicle.

11. Apparatus (5) according to any one of the preceding claims, including a user interface (7) having input means (21, 23, 25, 27, 29, 31, 32, 34, 35) enabling a user to selectively control the control system (15).

12. Apparatus (5) according to claim 11, the user interface (7) having input means (25) enabling a user to activate or deactivate the parking orientation facility.

13. Apparatus (5) according to claim 11 or claim 12, wherein the user interface (7) has input means (35) enabling a user to select an alternative orientation for the parked vehicle (1) from the target orientation determined by the processing means.

14. A method for parking a vehicle (1), including providing a control system (15) including processing means and sensor means (9, 11, 12, 13) connected with the processing means, using the processing means to determine the size of a parking space according to readings obtained from the sensor means (9, 11, 13);
said method being **characterized by**
using the processing means and sensor means (11, 12) to detect the presence of any vehicles (36, 37) parked adjacent the parking space on either longitudinal side thereof and to determine the forward or rearward facing orientation of any such detected vehicles (36, 37) according to inputs from the sensor means (11, 12);
using the processing means to determine a target forward or rearward facing orientation in which the vehicle (1) is to be parked in the parking space in accordance with at least one pre-defined preference based on the orientation of any detected vehicles (36, 37) parked adjacent to the parking space;
using the processing means to determine a pathway along which the vehicle (1) is to be moved in order to position the vehicle (1) within the parking space in the target orientation; and
using the processing means to generate control signals for a vehicle steering device (3) to guide the vehicle (1) along the pathway into the parking space in the target orientation.

15. A vehicle (1) including apparatus (5) according to any one of claims 1 to 13, or arranged to perform a method according to claim 14.

## Patentansprüche

1. Einparkhilfsvorrichtung (5) für ein Fahrzeug (1), umfassend ein Steuerungssystem (15) mit einem Verarbeitungsmittel und mit dem Verarbeitungsmittel verbundenen Sensormitteln (9, 11, 12, 13), wobei das Verarbeitungsmittel dazu ausgebildet ist:
die Größe einer freien Parklücke gemäß von den Sensormitteln (9, 11, 13) empfangenen Eingaben zu bestimmen;
wobei die Einparkhilfsvorrichtung **dadurch gekennzeichnet ist, dass** die Verarbeitungsmittel weiter dazu ausgebildet sind:
die Anwesenheit von etwaigen neben der Parklücke auf einer oder beiden der beiden Längsseiten davon geparkten Fahrzeugen (36, 37) zu erkennen und die nach vorne oder nach hinten weisende Orientierung etwaiger erkannter Fahrzeuge (36, 37) gemäß Eingaben von dem Sensormittel (12) zu bestimmen;
gemäß mindestens einer vorherbestimmten Präferenz basierend auf der Orientierung etwaiger neben der Parklücke geparkter erkannter Fahrzeuge (36, 37) eine nach vorne oder nach hinten weisende Sollorientierung zu bestimmen, in der das Fahrzeug (1) einzuparken ist;
eine Bahn zu bestimmen, entlang der das Fahrzeug (1) zu bewegen ist, um das Fahrzeug (1) in der Sollorientierung in der Parklücke zu positionieren; und
Steuersignale für eine Fahrzeuglenkvorrichtung (3) zu erzeugen, um das Fahrzeug (1) entlang der Bahn in der Sollorientierung in die Parklücke zu führen.

2. Vorrichtung (5) nach Anspruch 1, wobei das Verarbeitungsmittel eine Hauptpräferenz aufweist, um eine Solleinparkorientierung für das Fahrzeug (1) zu bestimmen, die die Fahrertür (63) des Fahrzeugs (1) neben der Fahrerseite (67) eines neben der Parklücke geparkten Fahrzeugs (37) positioniert.

3. Vorrichtung (5) nach Anspruch 2, wobei das Verarbeitungsmittel dazu angeordnet ist, eine Solleinparkorientierung für das Fahrzeug (1) gemäß einer voreingestellten Vorgabe für entweder nach vorne weisend oder nach hinten weisend zu bestimmen, falls nach Anwenden der mindestens einen vorherbestimmten Präferenz nicht anderweitig eine Sollorientierung bestimmt werden kann.

4. Vorrichtung (5) nach einem der vorangehenden Ansprüche, wobei das Sensormittel (12) zum Bestimmen der Orientierung von neben der Parklücke geparkten Fahrzeugen (36, 37) mindestens einen Infrarot- oder optischen Sensor umfasst.

5. Vorrichtung (5) nach Anspruch 4, wobei das Steuerungssystem (15) dazu ausgebildet ist, nach der Anwesenheit von einem oder mehreren hinteren Rückstrahlern (22) an einem etwaigen erkannten Fahrzeug (36, 37) zu suchen, um seine Orientierung zu bestimmen.

6. Vorrichtung (5) nach einem der vorangehenden Ansprüche, wobei das Verarbeitungsmittel weiter dazu angeordnet ist, die Bahn derart zu bestimmen, dass das Fahrzeug (1) seitlich und/oder längs in der Parklücke versetzt positioniert wird; und Steuersignale für eine Fahrzeuglenkvorrichtung (3) zu erzeugen, um das Fahrzeug (1) entlang der Bahn in der Sollorientierung und in der Soll-Versatzstellung in die Parklücke zu führen.

7. Vorrichtung (5) nach Anspruch 6, wobei in einem ersten Betriebsmodus das Verarbeitungsmittel dazu angeordnet ist, die Bahn derart zu bestimmen, dass die Fahrerseite (63) des Fahrzeugs (1) näher an einer mittleren Längsachse (45) der Parklücke positioniert ist als die Beifahrerseite (65) des Fahrzeugs.

8. Vorrichtung (5) nach Anspruch 6, wobei in einem zweiten Betriebsmodus das Verarbeitungsmittel dazu angeordnet ist, die Bahn derart zu bestimmen, dass die Beifahrerseite (65) des Fahrzeugs (1) näher an einer mittleren Längsachse (45) der Parklücke positioniert ist als die Fahrerseite (63) des Fahrzeugs.

9. Vorrichtung (5) nach einem der Ansprüche 6 bis 8, wobei in einem dritten Betriebsmodus das Verarbeitungsmittel dazu angeordnet ist, die Bahn derart zu bestimmen, dass die Front (18) des Fahrzeugs (1) näher an einer mittleren Querachse (44, 47) der Parklücke positioniert ist als das Heck (20) des Fahrzeugs.

10. Vorrichtung (5) nach einem der Ansprüche 6 bis 8, wobei in einem vierten Betriebsmodus das Verarbeitungsmittel dazu angeordnet ist, die Bahn derart zu bestimmen, dass das Heck (20) des Fahrzeugs (1) näher an einer mittleren Querachse (44, 47) der Parklücke positioniert ist als die Front (18) des Fahrzeugs.

11. Vorrichtung (5) nach einem der vorangehenden Ansprüche, umfassend eine Benutzeroberfläche (7) mit Eingabemitteln (21, 23, 25, 27, 29, 31, 32, 34, 35), die es einem Benutzer ermöglichen, das Steuerungssystem (15) selektiv zu bedienen.

12. Vorrichtung (5) nach Anspruch 11, wobei die Benutzeroberfläche (7) Eingabemittel (25) aufweist, die es einem Benutzer ermöglichen, die Einparkorientierungsfunktion zu aktivieren oder zu deaktivieren.

13. Vorrichtung (5) nach Anspruch 11 oder Anspruch 12, wobei die Benutzeroberfläche (7) Eingabemittel (35) aufweist, die es einem Benutzer ermöglichen, eine zu der von dem Verarbeitungsmittel bestimmten Sollorientierung alternative Orientierung für das geparkte Fahrzeug (1) zu wählen.

14. Verfahren zum Einparken eines Fahrzeugs (1), umfassend das Bereitstellen eines Steuerungssystems (15), umfassend Verarbeitungsmittel und mit dem Verarbeitungsmittel verbundene Sensormittel (9, 11, 12, 13), das Verwenden des Verarbeitungsmittels, um gemäß von den Sensormitteln (9, 11, 13) erhaltenen Messwerten die Größe einer Parklücke zu bestimmen;
wobei das Verfahren **gekennzeichnet ist durch** das Verwenden der Verarbeitungsmittel und Sensormittel (11, 12), um die Anwesenheit etwaiger neben der Parklücke auf einer oder beiden Längsseiten davon geparkter Fahrzeuge (36, 37) zu erkennen und die nach vorne oder nach hinten weisende Orientierung etwaiger derartiger erkannter Fahrzeuge (36, 37) gemäß Eingaben von den Sensormitteln (11, 12) zu bestimmen;
das Verwenden des Verarbeitungsmittels, um gemäß mindestens einer vorherdefinierten Präferenz basierend auf der Orientierung etwaiger neben der Parklücke geparkter erkannter Fahrzeuge (36, 37) eine nach vorne oder nach hinten weisende Sollorientierung zu bestimmen, in der das Fahrzeug (1) einzuparken ist;
das Verwenden des Verarbeitungsmittels, um eine Bahn zu bestimmen, entlang der das Fahrzeug (1) zu bewegen ist, um das Fahrzeug (1) in der Sollorientierung in der Parklücke zu positionieren; und
das Verwenden des Verarbeitungsmittels, um Steuersignale für eine Fahrzeuglenkvorrichtung (3) zu erzeugen, um das Fahrzeug (1) entlang der Bahn in der Sollorientierung in die Parklücke zu führen.

15. Fahrzeug (1), umfassend eine Vorrichtung (5) nach einem der Ansprüche 1 bis 13 oder das dazu angeordnet ist, ein Verfahren nach Anspruch 14 auszuführen.

## Revendications

1. Appareil d'aide au stationnement (5) pour un véhicule (1)**,** comprenant un système de commande (15) ayant un moyen de traitement et des moyens de capteur (9, 11, 12, 13) connectés au moyen de traitement, le moyen de traitement étant configuré pour :
déterminer la taille d'une place de stationnement libre selon des entrées reçues des moyens de capteur (9, 11, 13) ;
ledit appareil d'aide au stationnement étant **caractérisé en ce que** ledit moyen de traitement est en outre configuré pour :
détecter la présence de tout véhicule (36, 37) stationné adjacent à la place de stationnement de l'un ou l'autre côté longitudinal de celle-ci et déterminer l'orientation en regard vers l'avant ou vers l'arrière de tout véhicule détecté (36, 37) selon des entrées du moyen de capteur (12) ;
déterminer une orientation en regard vers l'avant ou vers l'arrière cible dans laquelle le véhicule (1) doit être stationné sur la place de stationnement en conformité avec au moins une préférence prédéterminée d'après l'orientation de tout véhicule détecté (36, 37) stationné adjacent à la place de stationnement ;
déterminer un trajet le long duquel le véhicule (1) doit se déplacer afin de positionner le véhicule (1) au sein de la place de stationnement dans l'orientation cible ; et
générer des signaux de commande pour un dispositif de direction de véhicule (3) pour guider le véhicule (1) le long du trajet vers la place de stationnement dans l'orientation cible.

2. Appareil (5) selon la revendication 1, dans lequel le moyen de traitement a une préférence principale pour déterminer une orientation de stationnement cible pour le véhicule (1) qui positionnera la portière du conducteur (63) du véhicule (1) adjacente au côté conducteur (67) d'un véhicule (37) stationné adjacent à la place de stationnement.

3. Appareil (5) selon la revendication 2, dans lequel le moyen de traitement est conçu pour déterminer une orientation de stationnement cible pour le véhicule (1) en conformité avec un défaut préétabli pour soit l'orientation en regard vers l'avant soit l'orientation en regard vers l'arrière, dans le cas où une orientation cible ne pourrait autrement pas être déterminée après application de la au moins une préférence prédéterminée.

4. Appareil (5) selon l'une quelconque des revendications précédentes, dans lequel le moyen de capteur (12) permettant de déterminer l'orientation de véhicules (36, 37) stationnés adjacents à la place de stationnement comprend au moins un capteur infrarouge ou optique.

5. Appareil (5) selon la revendication 4, dans lequel le système de commande (15) est configuré pour rechercher la présence d'un ou plusieurs réflecteurs arrière (22) sur tout véhicule détecté (36, 37) afin de déterminer son orientation.

6. Appareil (5) selon l'une quelconque des revendications précédentes, dans lequel le moyen de traitement est en outre conçu pour déterminer le trajet de sorte que le véhicule (1) soit positionné décalé latéralement et/ou longitudinalement sur la place de stationnement ; et pour générer des signaux de commande pour un dispositif de direction de véhicule (3) pour guider le véhicule (1) le long du trajet vers la place de stationnement dans l'orientation cible et dans la position de décalage cible.

7. Appareil (5) selon la revendication 6, dans lequel, dans un premier mode opérationnel, le moyen de traitement est conçu pour déterminer le trajet de sorte que le côté conducteur (63) du véhicule (1) soit positionné plus près d'un axe longitudinal central (45) de la place de stationnement que le côté passager (65) du véhicule.

8. Appareil (5) selon la revendication 6, dans lequel, dans un deuxième mode opérationnel, le moyen de traitement est conçu pour déterminer le trajet de sorte que le côté passager (65) du véhicule (1) soit positionné plus près de l'axe longitudinal central (45) de la place de stationnement que le côté conducteur (63) du véhicule.

9. Appareil (5) selon l'une quelconque des revendications 6 à 8, dans lequel, dans un troisième mode opérationnel, le moyen de traitement est conçu pour déterminer le trajet de sorte que l'extrémité avant (18) du véhicule (1) soit positionnée plus près d'un axe latéral central (44, 47) de la place de stationnement que l'extrémité arrière (20) du véhicule.

10. Appareil (5) selon l'une quelconque des revendications 6 à 8, dans lequel, dans un quatrième mode opérationnel, le moyen de traitement est conçu pour déterminer le trajet de sorte que l'extrémité arrière (20) du véhicule (1) soit positionnée plus près d'un axe latéral central (44, 47) de la place de stationnement que l'extrémité avant (18) du véhicule.

11. Appareil (5) selon l'une quelconque des revendications précédentes, comportant une interface utilisateur (7) ayant des moyens d'entrée (21, 23, 25, 27, 29, 31, 32, 34, 35) permettant à un utilisateur de commander sélectivement le système de commande (15).

12. Appareil (5) selon la revendication 11, l'interface utilisateur (7) ayant un moyen d'entrée (25) permettant à un utilisateur d'activer ou de désactiver la fonction orientation de stationnement.

13. Appareil (5) selon la revendication 11 ou la revendication 12, dans lequel l'interface utilisateur (7) a un moyen d'entrée (35) permettant à un utilisateur de sélectionner une orientation alternative pour le véhicule stationné (1) par à rapport à l'orientation cible déterminée par le moyen de traitement.

14. Procédé de stationnement d'un véhicule (1), comprenant la fourniture d'un système de commande (15) comprenant un moyen de traitement et des moyens de capteur (9, 11, 12, 13) connectés au moyen de traitement, l'utilisation du moyen de traitement pour déterminer la taille d'une place de stationnement selon des lectures obtenues en provenance des moyens de capteur (9, 11, 13) ;
ledit procédé étant **caractérisé par**
l'utilisation du moyen de traitement et des moyens de capteur (11, 12) pour détecter la présence de tout véhicule (36, 37) stationné adjacent à la place de stationnement de l'un ou l'autre côté longitudinal de celle-ci et pour déterminer l'orientation en regard vers l'avant ou vers l'arrière de tous ces véhicules détectés (36, 37) selon des entrées en provenance des moyens de capteur (11, 12) ;
l'utilisation du moyen de traitement pour déterminer une orientation en regard vers l'avant ou vers l'arrière cible dans laquelle le véhicule (1) doit être stationné sur la place de stationnement en conformité avec au moins une préférence prédéfinie d'après l'orientation de tout véhicule détecté (36, 37) stationné adjacent à la place de stationnement ;
l'utilisation du moyen de traitement pour déterminer un trajet le long duquel le véhicule (1) doit se déplacer afin de positionner le véhicule (1) sur la place de stationnement dans l'orientation cible ; et
l'utilisation du moyen de traitement pour générer des signaux de commande pour un dispositif de direction de véhicule (3) pour guider le véhicule (1) le long du trajet sur la place de stationnement dans l'orientation cible.

15. Véhicule (1) comprenant l'appareil (5) selon l'une quelconque des revendications 1 à 13, ou conçu pour réaliser un procédé selon la revendication 14.
